# EUROPÄISCHE PATENTANMELDUNG

(11) **EP 3 716 237 A1**
(43) Veröffentlichungstag der Anmeldung: **30.09.2020**
(21) Anmeldenummer: 20156318.6
(22) Anmeldetag: 10.02.2020
(51) Int. Cl.: G07G 1/14, G06Q 20/04, G06Q 20/20, G06Q 20/34, G06Q 20/38, G07F 7/08

(54) **KASSENVORGANGSPROTOKOLLIERVORRICHTUNG**

(30) Priorität: 27.03.2019 DE 102019107886
(71) Anmelder: Wincor Nixdorf International GmbH, 33106 Paderborn (DE)
(72) Erfinder: HOFFMANN, Stefan, 13505 Berlin (DE); MATTKE, Thomas, 15746 Groß Köris (DE)
(74) Vertreter: Viering, Jentschura & Partner mbB Patent- und Rechtsanwälte

(57) **Zusammenfassung**

Gemäß einem Ausführungsbeispiel wird eine Kassenvorgangsprotokolliervorrichtung beschrieben aufweisend eine Netzwerkschnittstelle, eingerichtet zum Verbinden der Kassenvorgangsprotokolliervorrichtung mit einer Mehrzahl von Kassen mittels eines Kommunikationsnetzwerks, eine Mehrzahl von technischen Sicherheitseinrichtungen, die jeweils eine digitale Schnittstelle, ein Sicherheitsmodul und einen Speicher aufweisen und zum Protokollieren von Kassenvorgängen eingerichtet sind und eine Steuereinrichtung, die eingerichtet ist, mittels der Netzwerkschnittstelle von den Kassen Nachrichten bezüglich Kassenvorgängen zu empfangen und den technischen Sicherheitseinrichtungen zur Protokollierung zuzuweisen.

## Beschreibung

Ausführungsbeispiele betreffen allgemein Kassenvorgangsprotokolliervorrichtungen.

Heutzutage werden Geschäftsvorfälle wie Kassenvorgänge, z.B. das Bezahlen (d.h. der Checkout) in einem Supermarkt, zunehmend unter Verwendung elektronischer Aufzeichnungssysteme (wie elektronischer Kassensysteme und Registrierkassen) digital erfasst und aufgezeichnet. Aus Sicht der Steuerprüfung ermöglichen elektronische Aufzeichnungssysteme zwar die Bereitstellung gut aufbereiteter Steuerdaten, nachträgliche Manipulationen an den digitalen Aufzeichnungen können ohne ausreichende Schutzmaßnahmen jedoch nur mit hohem Aufwand festgestellt werden.

Um Manipulationen wirksam zu verhindern, ist es deshalb wünschenswert, die Integrität, Authentizität und Vollständigkeit der aufgezeichneten Daten sicherzustellen. Außerdem ist es wünschenswert, die aufzuzeichnenden Daten, z.B. die Bon-Daten im Falle eines Kassenvorgangs (d.h. eines Bezahlvorgangs) in einem Supermarkt, unmittelbar zu erfassen und es zu ermöglichen, dass sie im Rahmen einer Prüfung (z.B. durch eine Finanzbehörde) zeitlich aufgefunden werden können.

Um dies zu erreichen, ist die Verwendung von technischen Sicherheitseinrichtungen (TSEs) vorgesehen. Ein elektronisches Aufzeichnungssystem kann mit einer technischen Sicherheitseinrichtung (TSE) kommunizieren und die technische Sicherheitseinrichtung sorgt für die sichere Speicherung der aufzuzeichnenden Daten in einem einheitlichen Format. Ein Prüfer kann die sicher gespeicherten Daten einfordern und auf Vollständigkeit und Korrektheit prüfen.

Da die Bereitstellung von technischen Sicherheitseinrichtungen in einem Aufzeichnungssystem wie beispielsweise einer Kassenanordnung mit mehreren Kassen, mit hohen Kosten verbunden ist, ist eine effiziente Bereitstellung und Nutzung von technischen Sicherheitseinrichtungen wünschenswert.

Gemäß einem Ausführungsbeispiel wird eine Kassenvorgangsprotokolliervorrichtung bereitgestellt aufweisend eine Netzwerkschnittstelle, eingerichtet zum Verbinden der Kassenvorgangsprotokolliervorrichtung mit einer Mehrzahl von Kassen mittels eines Kommunikationsnetzwerks, eine Mehrzahl von technischen Sicherheitseinrichtungen, die jeweils eine digitale Schnittstelle, ein Sicherheitsmodul und einen Speicher aufweisen und zum Protokollieren von Kassenvorgängen eingerichtet sind und eine Steuereinrichtung, die eingerichtet ist, mittels der Netzwerkschnittstelle von den Kassen Nachrichten bezüglich Kassenvorgängen zu empfangen und den technischen Sicherheitseinrichtungen zur Protokollierung zuzuweisen.

Die Figuren geben nicht die tatsächlichen Größenverhältnisse wieder sondern sollen dazu dienen, die Prinzipien der verschiedenen Ausführungsbeispiele zu illustrieren. Im Folgenden werden verschiedene Ausführungsbeispiele mit Bezug auf die folgenden Figuren beschrieben.
- Figur 1: zeigt eine Kassenanordnung.
- Figur 2: zeigt ein elektronisches Aufzeichnungssystem mit einer technischen Sicherheitseinrichtung.
- Figur 3: gibt einen Überblick über die Anwendungs- und Protokolldaten.
- Figur 4: zeigt eine Kassenanordnung, bei der mehrere TSEs in einer zentralen Vorrichtung angeordnet sind.
- Figur 5: zeigt eine Kassenanordnung, bei der mehrere TSEs mittels Schnittstellen für sichere Speicherkarten in einer zentralen Vorrichtung angeordnet sind.
- Figur 6: zeigt ein Nachrichtenflussdiagramm.
- Figur 7: zeigt eine Kassenvorgangsprotokolliervorrichtung gemäß einer Ausführungsform.

Die folgende detaillierte Beschreibung bezieht sich auf die beiliegenden Figuren, die Details und Ausführungsbeispiele zeigen. Diese Ausführungsbeispiele sind so detailliert beschrieben, dass der Fachmann die Erfindung ausführen kann. Andere Ausführungsformen sind auch möglich und die Ausführungsbeispiele können in struktureller, logischer und elektrischer Hinsicht geändert werden, ohne vom Gegenstand der Erfindung abzuweichen. Die verschiedenen Ausführungsbeispiele schließen sich nicht notwendig gegenseitig aus sondern es können verschiedene Ausführungsformen miteinander kombiniert werden, so dass neue Ausführungsformen entstehen. Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung.

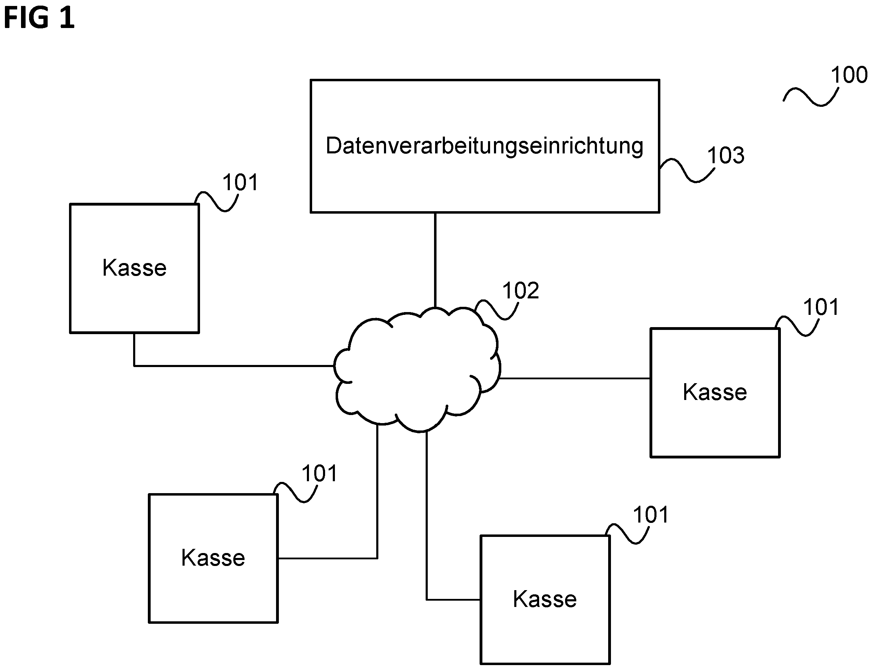

Figur 1 zeigt eine Kassenanordnung 100.

Die Kassenanordnung 100 weist eine Mehrzahl von Kassen 101 auf, die über ein Netzwerk 102 mit einer zentralen Datenverarbeitungseinrichtung 103 verbunden sind.

Durch Ausführung entsprechender Software auf der zentralen Datenverarbeitungseinrichtung 103 und den Kassen 101 implementiert die Kassenanordnung 100 beispielsweise ein elektronisches Kassensystem.

Beispielsweise befindet sich die Kassenanordnung 100 in einem Supermarkt. Die Kassen 101 können dann stationäre Registrierkassen wie Self-Checkout-Kassen und/oder von Verkäufern bediente Kassen des Supermarkts sein. Die zentrale Datenverarbeitungseinrichtung 103 ermöglicht beispielsweise das zentrale Zuweisen von Preisen und Artikelnamen zu Barcodes und insbesondere das zentrale Ändern von Preisen sowie verschiedene Auswertungen wie beispielsweise eine zentrale Aufzeichnung der Mengen verkaufter Waren.

Die Kassen 101 können auch mobile Endgeräte sein, wie sie typischerweise in der Gastronomie zum Einsatz kommen. Sie dienen dann auch zum Aufnehmen von Bestellungen. Die zentrale Datenverarbeitungseinrichtung 103 sammelt dann beispielsweise die Bestellungen und kann mit einer Anzeigeeinrichtung versehen sein, um sie in der Küche anzuzeigen. Die Rechnung für einen Gast kann beispielsweise von der zentralen Datenverarbeitungseinrichtung 103 ausgedruckt werden oder jede Kasse 101 kann dazu eingerichtet sein, Rechnungen auszudrucken.

Es sollte beachtet werden, dass der Begriff "Kasse" allgemein als eine mit einem Zahlungsvorgang befasste Vorrichtung verstanden wird und entsprechend auch eine mobile Kasse, die selbst keine Bargeldbestände aufnehmen kann, wie die in der Gastronomie verwendeten mobile Endgeräte, beinhaltet.

Insbesondere kann "Kasse" als eine Vorrichtung verstanden werden, die in einem Kassenvorgang (z.B. einem Bezahlvorgang in einem Supermarkt oder einem Bestellvorgang in einem Restaurant) Waren und/oder Dienstleistungen erfasst, die zu bezahlen sind.

Die zentrale Datenverarbeitungseinrichtung 103 sammelt Daten über Kassenvorgänge und zeichnet sie auf, insbesondere welche zu bezahlenden Waren und/oder Dienstleistungen von den Kassen 101 erfasst wurden. Die Kassenanordnung 100 arbeitet somit als elektronisches Aufzeichnungssystem.

In Deutschland sind für die Verwendung von elektronischen Aufzeichnungssystemen in Zukunft bestimmte Vorschriften zu beachten. Diese ergeben sich aus dem Gesetz zum Schutz vor Manipulationen an digitalen Grundaufzeichnungen von 2016 und der Verordnung zur Bestimmung der technischen Anforderungen an elektronische Aufzeichnungs- und Sicherungssysteme im Geschäftsverkehr von 2017.

Insbesondere werden dadurch eine Belegpflicht, eine Pflicht zur Kassenregistrierung, der Bereitstellung einer Exportschnittstelle und der Kassennachschau über eine einheitliche digitale Schnittstelle und der Einsatz einer zertifizierten technischen Sicherheitseinrichtung ab dem 1.1.2020 verpflichtend vorgeschrieben.

Das Zertifizierungslevel ist sehr hoch nach Common Criteria EAL4+, EAL2 und nach TR.

Vom Bundesamt für Sicherheit in der Informationstechnik ist seit 2018 eine technische Richtlinie für die technische Sicherheitseinrichtung für elektronische Aufzeichnungssysteme verfügbar.

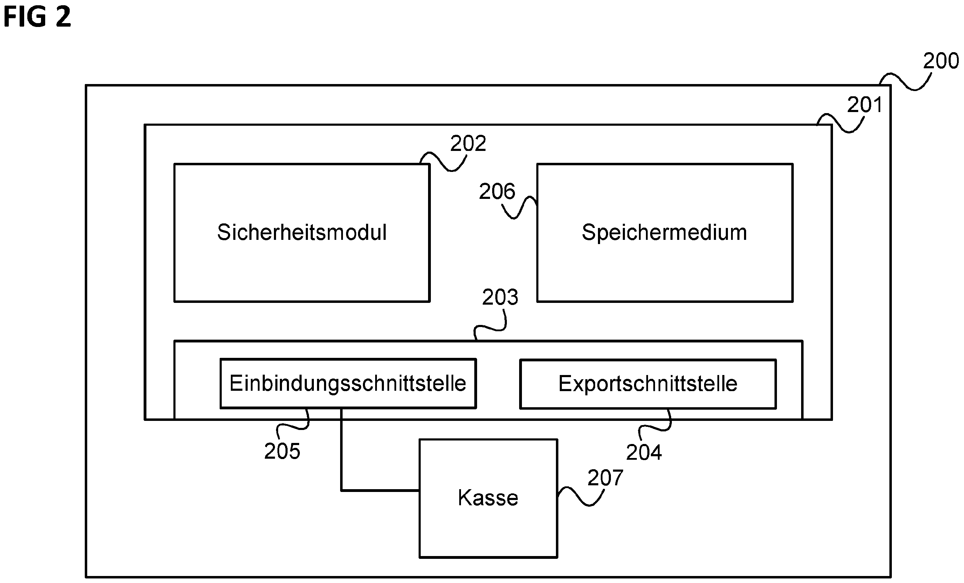

Figur 2 zeigt ein elektronisches Aufzeichnungssystem 200 mit einer technischen Sicherheitseinrichtung 201.

Die technische Sicherheitseinrichtung weist ein Sicherheitsmodul 202, eine (einheitliche) digitale Schnittstelle 203 und ein Speichermedium 204 auf.

Das Sicherheitsmodul 202 sorgt für die sichere Protokollierung der aufzuzeichnenden Kassenvorgänge, generiert aus importierten Kassendaten, die einen (Kassen-)vorgang betreffen, korrespondierende Protokolldaten und sorgt für die manipulationssichere Festlegung einer fortlaufenden Transaktionsnummer, der Zeitpunkte von Beginn und Ende des Vorgangs sowie eines Prüfwerts.

Die einheitliche digitale Schnittstelle weist eine Exportschnittstelle 204 und eine Einbindungsschnittstelle (Importschnittstelle) 205 auf.

Das Speichermedium 206 dient zur Speicherung der Kassendaten und der zugehörigen Protokolldaten.

Die Aufzeichnungssystem 200 weist eine oder mehrere Kassen 207 auf.

Jeder aufzuzeichnende Vorgang wird in der technischen Sicherheitseinrichtung 201 über eine Transaktion abgebildet. Die Aufzeichnung von steuerrelevanten Geschäftsvorfällen läuft wie folgt ab:
- Die Kassenvorgangsdaten, die von der Kasse geliefert werden (aber auch noch von anderen Komponenten des Aufzeichnungssystems 200 zuvor verarbeitet werden können), werden über die einheitliche digitale Schnittstelle 203 an die technische Sicherheitseinrichtung 201 übergeben.
- Das Sicherheitsmodul 202 vergibt eine eindeutige fortlaufende Transaktionsnummer, erfasst Beginn und Ende der Transaktion und erzeugt über die Daten der Transaktion einen Prüfwert.
- Die abgesicherten Transaktionsdaten werden auf dem Speichermedium 206 gespeichert.

Ein Vorgang ist beispielsweise ein Bezahlvorgang in einem Supermarkt. Dabei werden beispielsweise mehrere Waren an einer Kasse gescannt (erfasst). Die Kasse sendet dann (ggf. über ein oder mehrere andere Komponenten des Aufzeichnungssystems) für jede gescannte Ware Kassenvorgangsdaten an die technische Sicherheitseinrichtung, typischerweise eine Identifikation (z.B. eine Nummer) der erfassten Ware. Wenn der Vorgang gestartet wird, was typischerweise durch Scannen des ersten Produkts erfolgt, legt das technische Sicherheitsmodul eine neue Transaktion, auf die sie den Bezahlvorgang abbildet, an, erzeugt eine Transaktionsnummer und protokolliert den Beginn der Transaktion. Sie empfängt dann die Information über alle erfassten Waren nacheinander als Vorgangsdaten entsprechend dem sequentiellen Scannen der Waren an der Kasse. Nach dem Scannen der Waren empfängt die technische Sicherheitseinrichtung von der Kasse Vorgangsdaten über das eigentliche Bezahlen (insbesondere die Zahlungsart). Außerdem protokolliert sie den Endzeitpunkt des Kassenvorgangs.

Letztendlich speichert die technische Sicherheitseinrichtung für die Transaktion den Zeitpunkt des Vorgangbeginns, eine eindeutige und fortlaufende Transaktionsnummer, die Art des Vorgangs, die Daten des Vorgangs, die Zahlungsart, den Zeitpunkt der Vorgangsbeendigung oder des Vorgangsabbruchs, einen Prüfwert sowie die Seriennummer des elektronischen Aufzeichnungssystems oder die Seriennummer des Sicherheitsmoduls.

Als Anwendungs- oder Kassendaten (oder hierin auch Kassenvorgangsdaten) werden die Daten bezeichnet, die vom Aufzeichnungssystem (insbesondere von der Kasse 207) über einen aufzuzeichnenden Vorgang erstellt und zur Absicherung an die technische Sicherheitseinrichtung übermittelt werden. Dies umfasst insbesondere die Art des Vorgangs, die vom Aufzeichnungssystem erzeugten Daten des Vorgangs und die Zahlungsart.

Als Protokolldaten werden die Daten bezeichnet, die im Rahmen der Absicherung der übermittelten Anwendungsdaten vor der Berechnung des Prüfwertes von der technischen Sicherheitseinrichtung erzeugt werden. Hierzu zählen insbesondere die Transaktionsnummer oder die Zeitpunkte des Vorgangsbeginns bzw. -endes.

Anwendungs- und Protokolldaten (zusammen auch als Transaktionsdaten bezeichnet) bilden in geeigneter Strukturierung den Input für die Prüfwertberechnung. Die Protokolldaten und der Prüfwert werden zusammen als abgesicherte Protokolldaten bezeichnet. Durch die Erzeugung der abgesicherten Protokolldaten werden die Anwendungsdaten mit den zugehörigen Protokolldaten (d.h. die Transaktionsdaten) abgesichert.

Die Transaktionsnummer ist eine eindeutige und fortlaufende Nummer, welche manipulationssicher vom Sicherheitsmodul der technischen Sicherheitseinrichtung festgelegt wird. Sie wird mit jeder Transaktion inkrementiert.

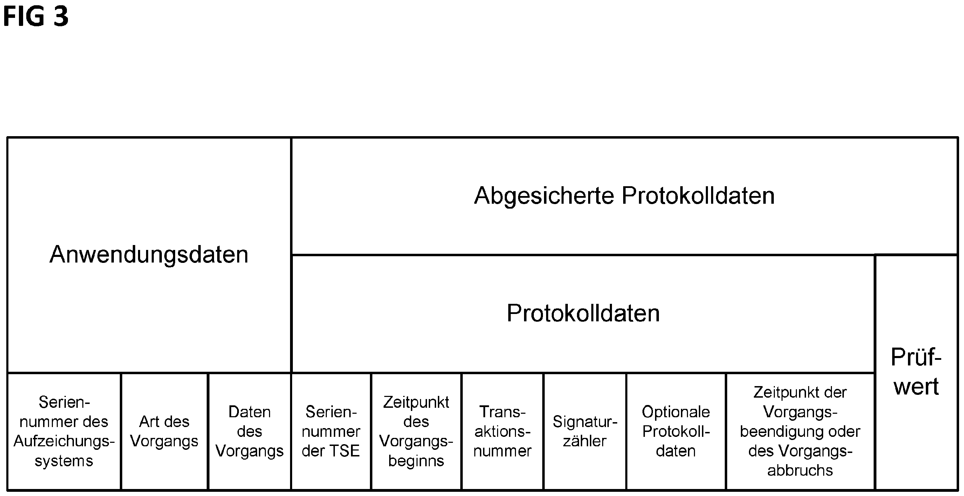

Figur 3 gibt einen Überblick über die Anwendungs- und Protokolldaten.

Der Signaturzähler ist ein fortlaufender Zähler, der vom Sicherheitsmodul der technischen Sicherheitseinrichtung festgelegt wird. Im Gegensatz zur Transaktionsnummer wird der Signaturzähler bei jeder erstellten Signatur inkrementiert. Der Signaturalgorithmus enthält den Algorithmus für die Prüfwertberechnung.

Eine jeweilige technische Sicherheitseinrichtung kann in jeder Kasse einer Kassenanordnung vorgesehen werden. Bei größeren Kasseninstallationen, beispielsweise einer Kassenanordnung 100 mit einer Vielzahl von Kassen 101 ist es jedoch aufwändig, jede einzelne Kasse 101 mit einer eigenen technischen Sicherheitseinrichtung auszustatten.

Deshalb ist gemäß verschiedenen Ausführungsformen vorgesehen, eine zentrale Einrichtung bereitzustellen, die mehrere TSEs enthält. Beispielsweise wird ein sogenannter Fiskal-Server-Computer (allgemein auch als Kassenvorgangsprotokolliervorrichtung bezeichnet) bereitgestellt, der mehrere TSEs in einem Gehäuse enthält.

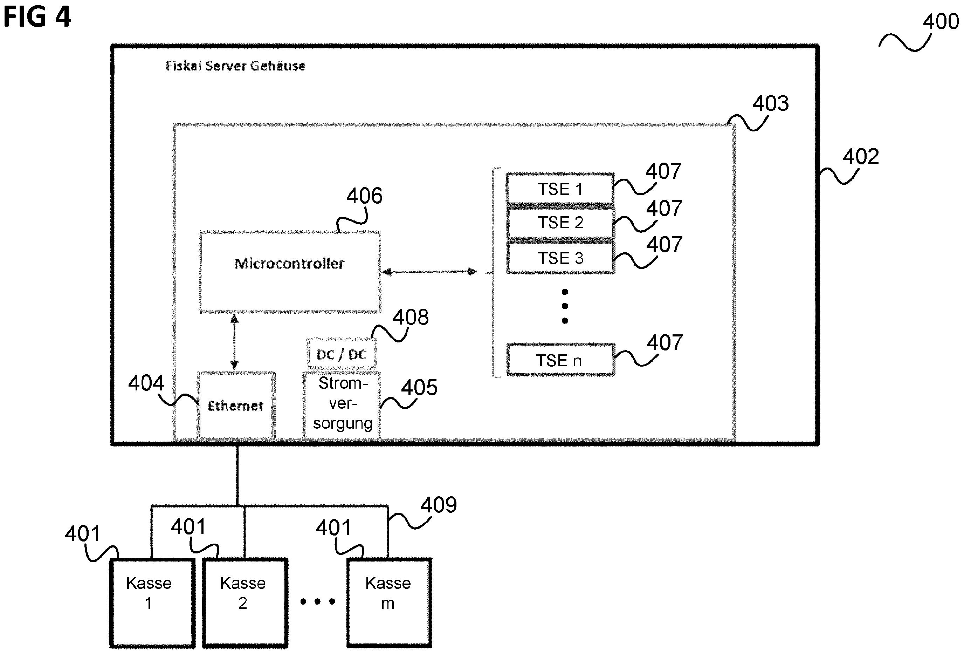

Figur 4 zeigt eine Kassenanordnung 400, bei der mehrere TSEs in einer zentralen Vorrichtung angeordnet sind.

Die Kassenanordnung 400 weist eine Mehrzahl von Kassen 401 auf, die beispielsweise den Kassen 101 entsprechen.

Die Kassen 401 sind über ein Netzwerk 409, beispielsweise ein Ethernet, mit einer Fiskal-Server-Vorrichtung 403 in einem Fiskal-Server-Gehäuse 402 verbunden. Die Fiskal-Server-Vorrichtung 403 stellt, durch entsprechende Hardware und Software, einen Fiskal-Server bereit.

Das Fiskal-Server-Gehäuse 402 kann beispielsweise auch die zentrale Datenverarbeitungseinrichtung 103 beinhalten. Beispielsweise kann eine Datenverarbeitungsvorrichtung vorgesehen sein, die sowohl der Fiskal-Server-Vorrichtung 403 als auch der zentralen Datenverarbeitungseinrichtung 103 entspricht. Die zentrale Datenverarbeitungseinrichtung 103 und die Fiskal-Server-Vorrichtung 403 können aber auch getrennten Datenverarbeitungsvorrichtungen entsprechen (die getrennte Gehäuse aufweisen können).

Die Fiskal-Server-Vorrichtung 403 weist eine Netzwerkschnittstelleneinrichtung 404 (z.B. eine Ethernet-Netzwerkkarte), eine Stromversorgung 405 (z.B. ein Netzteil) und eine Steuereinrichtung 406 (beispielsweise einen Mikrocontroller) auf. Außerdem weist die Fiskal-Server-Vorrichtung 403 mehrere TSEs 407 auf. Die TSEs 407 sind mit der Steuereinrichtung 406 beispielsweise über einen Bus verbunden, z.B. einen USB (Universal Serial Bus). Zur Bereitstellung der Betriebsspannung des Busses kann die Fiskal-Server-Vorrichtung 403 einen Gleichstromwandler 408 aufweisen.

Die Fiskal-Server-Vorrichtung 403, die mehrere TSEs 407 in einem Gehäuse aufweist, ermöglicht es, alle Kassen 401, z.B. alle Kassen in einem Supermarkt, mit der vorgeschriebenen TSE-Funktionalität zu versorgen. Die Kommunikation zwischen einer Kasse 401 und der Fiskal-Server-Vorrichtung 403 erfolgt über eine Netzwerkverbindung mittels des Netzwerks 409. Die Steuereinrichtung 406 steuert die TSEs 407 und verwaltet die Verteilung von Vorgangsdaten, die von den Kassen 401 an die Fiskal-Server-Vorrichtung 403 gesendet werden, an die TSEs 407.

Die TSEs 407 können entnehmbar und austauschbar in der Fiskal-Server-Vorrichtung 403 vorgesehen sein. Dies ermöglicht es, ein volles TSE 407, d.h. eine TSE, dessen Speichermedium 206 voll ist, zu entnehmen und zu archivieren und durch ein frisches TSE zu ersetzen. Dazu können die TSEs 407 beispielsweise mittels einer Schnittstelle für sichere digitale Speicherkarten, d.h. eine SD-Karten-Schnittstelle, in der Fiskal-Server-Vorrichtung 403 angeordnet werden.

Es können genauso viele TSEs 407 vorgesehen sein, wie Kassen versorgt werden sollen (d.h. n = m in Figur 4). Es können jedoch auch weniger TSEs 407 vorgesehen sein, als Kassen versorgt werden sollen (d.h. n < m in Figur 4). Auch n > m ist möglich.

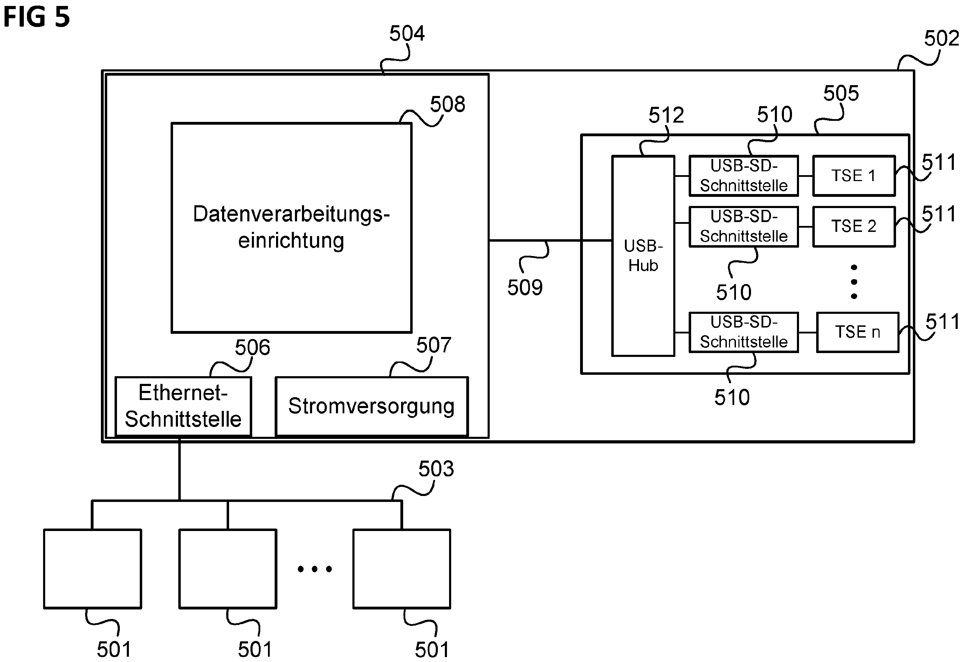

Figur 5 zeigt eine Kassenanordnung 500, bei der mehrere TSEs mittels Schnittstellen für sichere Speicherkarten in einer zentralen Vorrichtung angeordnet sind.

Analog zu Figur 4 weist die Kassenanordnung 500 eine Mehrzahl von Kassen 501 auf, die beispielsweise den Kassen 101 entsprechen. Die Kassen 501 sind über ein Netzwerk 503, beispielsweise ein Ethernet, mit einer Fiskal-Server-Vorrichtung in einem Fiskal-Server-Gehäuse 502 verbunden.

Die Fiskal-Server-Vorrichtung weist in diesem Ausführungsbeispiel ein Hauptmodul 504 und ein TSE-Erweiterungsmodul 505 auf.

Das Hauptmodul 504 weist eine Netzwerkschnittstelleneinrichtung 506 (z.B. eine Ethernet-Netzwerkkarte), eine Stromversorgung 507 (z.B. ein Netzteil) und eine Datenverarbeitungseinrichtung 508 (z.B. ein SOM (system on module) mit einem Mikroprozessor) auf. Das Hauptmodul kann übliche Komponenten eines Computers wie einen Einschaltknopf, eine USB-Schnittstelle, LEDs zur Statusanzeige etc. aufweisen, die so am Gehäuse 502 angeordnet sind, dass sie von außen erreichbar bzw. sichtbar sind.

Die Datenverarbeitungseinrichtung 508 entspricht beispielsweise der Steuereinrichtung 406.

Das TSE-Erweiterungsmodul 505 ist in dem Gehäuse 502 angeordnet, beispielsweise in Form einer von dem Hauptmodul separaten Platine. Das TSE-Erweiterungsmodul 505 ist mit dem Hauptmodul 504 über einen Computerbus 509 verbunden, in diesem Beispiel mittels einer USB-Verbindung. Das TSE-Erweiterungsmodul 505 kann über einen entsprechenden Anschluss von dem Hauptmodul 504 mit Strom versorgt werden. Es kann einen Gleichstromwandler aufweisen, um die Spannung der zugeführten elektrischen Energie entsprechend seiner Anforderungen anzupassen.

Das TSE-Erweiterungsmodul 505 weist einen USB-Hub 512 auf, der mittels der USB-Verbindung 509 mit dem Hauptmodul 504 verbunden ist. Der USB-Hub 512 verteilt die USB-Verbindung 509 mit dem Hauptmodul auf USB-SD-Karten-Schnittstellen 510.

Eine Mehrzahl von TSEs 511 sind jeweils im Format einer SD-Karte implementiert. Die TSEs können auch allgemein in einem Speicherkartenformat, einem USB-Stick-Format oder einem ähnlichem Format implementiert sein. Eine SD-Karte, die eine TSE 511 implementiert, weist beispielsweise einen oder mehrere Speicher und ein sicheres Element (sicheres Datenverarbeitungselement, z.B. mit einem Mikroprozessor) auf. Eine TSE 511 kann beispielsweise einen Speicher als Arbeitsspeicher aufweisen und einen weiteren Speicher zum Speichern der aufzuzeichnenden Daten (z.B. Anwendungsdaten und abgesicherter Protokolldaten). Der Speicher zum Speichern der aufzuzeichnenden Daten ist beispielsweise ein WORM (Write Once Read Many)-Speicher.

Gemäß einer Ausführungsform kann somit die Fiskal-Server-Vorrichtung eine Mehrzahl von TSEs mit entsprechender Anschlussschnittstelle (in diesem Beispiel eine SD-Karten-Schnittstelle) aufweisen.

Die Zuordnung von Transaktion zu TSE kann flexibel sein und von der Steuereinrichtung 406, Beispielsweise beim Beginn eines Kassenvorgangs, vorgenommen werden, wie es im Folgenden mit Bezug auf Figur 5 beschrieben ist.

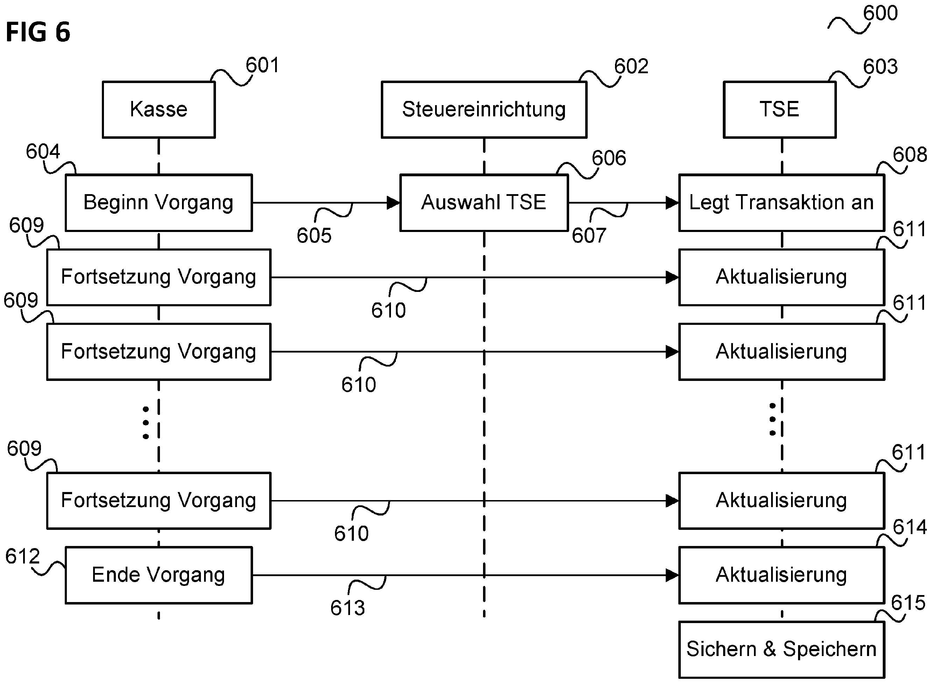

Figur 6 zeigt ein Nachrichtenflussdiagramm 600.
An dem in Figur 6 gezeigten Nachrichtenfluss sind eine Kasse 601, die beispielsweise einer der Kassen 401 entspricht, eine Steuereinrichtung 602 in einer Fiskal-Server-Vorrichtung, die beispielsweise der Steuereinrichtung 406 entspricht, und eine TSE 603, das beispielsweise einer der TSEs 407 entspricht, beteiligt.

In 604 wird an der Kasse 601 ein Kassenvorgang gestartet. Beispielsweise wird ein erstes Produkt gescannt oder eine erste Bestellung für einen Tisch eingegeben.

In 605 übermittelt die Kasse 601 die Information über den begonnenen Kassenvorgang (z.B. die Information, dass ein Kassenvorgang begonnen wurde und die Information über das erste erfasste Produkt oder die erste Bestellung) in Form von Vorgangsdaten an die Fiskal-Server-Vorrichtung und damit an die Steuereinrichtung 602.

Die Steuereinrichtung 602 wählt dann in 606 eine TSE zur Protokollierung des Kassenvorgangs aus. In diesem Beispiel wird angenommen, dass die Steuereinrichtung 602 die TSE 603 auswählt. In 607 instruiert die Steuereinrichtung 602 die TSE 603 entsprechend und leitet die Vorgangsdaten an die TSE 603 weiter.

In 608 legt die TSE für den Kassenvorgang eine Transaktion an und erzeugt Anwendungsdaten und Protokolldaten, z.B. eine Identifikation der Art des Vorgangs, einer Zeitangabe des Vorgangsbeginns, eine Transaktionsnummer etc. wie oben beschrieben. Teile der Anwendungsdaten und Protokolldaten können auch direkt von der Kasse 601 mittels der Vorgangsdaten geliefert werden, wie die Identifikation der Art des Vorgangs, einer Zeitangabe des Vorgangsbeginns und insbesondere die Daten des Vorgangs (z.B. die Identifikation eines gescannten Produkts oder bestellten Gerichts).

Anschließend wird der Kassenvorgang mehrmals in 609 fortgesetzt (z.B. weitere Produkte gescannt oder Gerichte bestellt) und in 610 jeweils von der Kasse 601 jeweilige Vorgangsdaten an die Fiskal-Server-Vorrichtung übermittelt und von der Steuereinrichtung 602 an die

(ausgewählte) TSE 603 weitergeleitet. Die TSE 603 führt jeweils in 611 eine Aktualisierung der Transaktion (auch bezeichnet als Update-Transaction-Operation) durch. Beispielsweise fügt die TSE 603 die übermittelten Vorgangsdaten (z.B. die Information über ein gescanntes Produkt oder ein bestelltes Gericht) der Transaktion hinzu. Insbesondere erweitert die TSE 603 die Transaktionsdaten basierend auf den von der Kasse übermittelten Vorgangsdaten.

In 612 wird der Kassenvorgang dann beendet, beispielsweise bezahlt der Kunde in einem Supermarkt oder der Gast in einem Restaurant. Noch einmal übermittelt die Kasse 601 in 613 entsprechende Vorgangsdaten, die die Steuereinrichtung 602 an die TSE 603 weiterleitet. Beispielsweise enthalten diese Vorgangsdaten die Information, wie der Kunde oder Gast bezahlt hat.

In 614 führt die TSE dann die letzte Aktualisierung der Transaktion durch. Beispielsweise fügt sie den Transaktionsdaten die Zahlungsart hinzu.

In 615 sichert die TSE 603 dann die Transaktionsdaten und speichert die gesicherten Transaktionsdaten auf ihrem Speichermedium (z.B. WORM-Speichermedium) wie oben beschrieben.

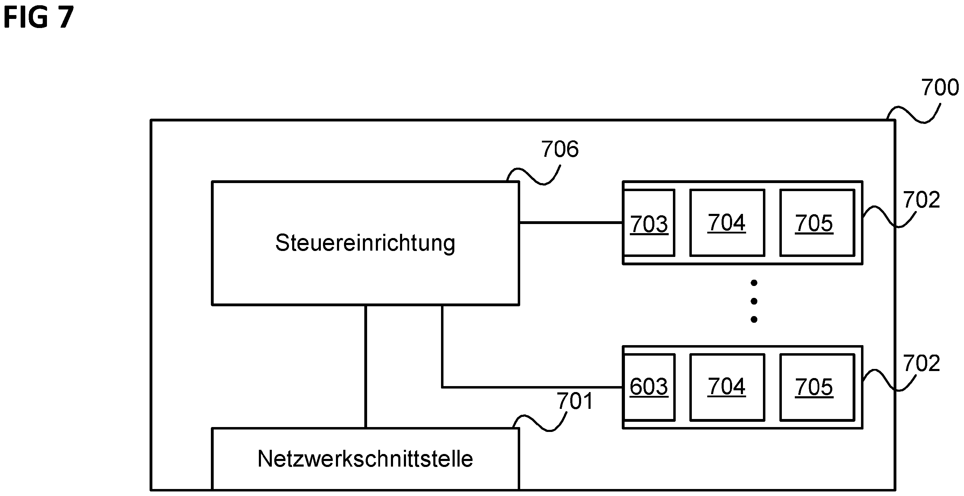

Zusammenfassend wird gemäß verschiedenen Ausführungsformen eine Kassenvorgangsprotokolliervorrichtung bereitgestellt, wie sie in Figur 7 dargestellt ist.

Figur 7 zeigt eine Kassenvorgangsprotokolliervorrichtung 700 gemäß einer Ausführungsform.

Die Kassenvorgangsprotokolliervorrichtung 700 weist eine
eine Netzwerkschnittstelle 701, eingerichtet zum Verbinden der Kassenvorgangsprotokolliervorrichtung mit einer Mehrzahl von Kassen mittels eines Kommunikationsnetzwerks und eine Mehrzahl von technischen Sicherheitseinrichtungen 702 auf, die jeweils eine digitale Schnittstelle 703, ein Sicherheitsmodul 704 und einen Speicher 705 aufweisen und zum Protokollieren von Kassenvorgängen eingerichtet sind.

Die Kassenvorgangsprotokolliervorrichtung 700 weist ferner eine Steuereinrichtung 706 auf, die eingerichtet ist, mittels der Netzwerkschnittstelle 701 von den Kassen Nachrichten bezüglich Kassenvorgängen zu empfangen und den technischen Sicherheitseinrichtungen 702 zur Protokollierung zuzuweisen.

Gemäß verschiedenen Ausführungsformen wird anschaulich eine Gruppe von TSEs bereitgestellt, die als TSEs für eine Vielzahl von Kassen dienen. Eine TSE kann dabei mehrere Kassen gleichzeitig bedienen, d.h. mehrere Kassenvorgänge gleichzeitig protokollieren. Das heißt, dass ein Vorgang (und die entsprechende Transaktion), den eine TSE protokolliert, noch nicht beendet zu sein braucht, bevor der TSE ein neuer Vorgang zugewiesen wird. Die Kassenvorgangsprotokolliervorrichtung kann jedoch auch derart eingerichtet sein, dass jede TSE immer nur einen Vorgang auf einmal protokolliert. In diesem Fall können so viele TSEs in der Kassenvorgangsprotokolliervorrichtung vorgesehen sein, wie Kassen von der Kassenvorgangsprotokolliervorrichtung bedient werden (d.h. mit der TSE-Funktionalität versorgt werden).

Die Herangehensweise von Figur 7 ermöglicht es, eine Mehrzahl von Kassen mit der erforderlichen TSE-Funktionalität zu versorgen, ohne dass jede Kasse mit einem eigenen TSE ausgestattet werden muss. Insbesondere ist es nicht erforderlich, Änderungen an der Hardware einer Kasse vorzunehmen, um das Erfordernis der Bereitstellung einer TSE zu erfüllen. Es ist ausreichend, beispielsweise in einem Supermarkt ein Gerät, das mehrere TSEs enthält, für alle Kassen im Supermarkt bereitzustellen. Dies kann auf einfache Art erfolgen, da lediglich eine Netzwerkverbindung zu den Kassen und eine Stromversorgung erforderlich sind. Die Kassenvorgangsprotokolliervorrichtung (oben auch als Fiskal-Server-Vorrichtung bezeichnet) kann mit weniger TSEs ausgestattet sein, als es Kassen gibt, die von der Kassenvorgangsprotokolliervorrichtung mit der Protokollierfunktionalität (d.h. der TSE-Funktionalität) versorgt werden.

Ab einer gewissen Anzahl von Kassen können durch die Herangehensweise von Figur 7 somit Hardwarekosten eingespart werden.

Die Kassenvorgangsprotokolliervorrichtung 700 ist beispielsweise mittels eines lokalen Kommunikationsnetzwerks mit den Kassen verbunden. Dies bedeutet, dass die Netzwerkschnittstelle eingerichtet ist zum Verbinden der Kassenvorgangsprotokolliervorrichtung mit einer Mehrzahl von Kassen mittels eines lokalen Kommunikationsnetzwerks. Diese Verbindung ist beispielsweise ein Verbindung ausschließlich über ein lokales Kommunikationsnetzwerk, d.h. z.B. frei von einer WAN (Wide Area Network)-Verbindung. Gemäß einer Ausführungsform ist die Netzwerkschnittstelle also eingerichtet zum Verbinden der Kassenvorgangsprotokolliervorrichtung mit der Mehrzahl von Kassen ausschließlich (oder nur) über ein lokales Kommunikationsnetzwerk, d.h. frei von (d.h. ohne Beteiligung) einer WAN(Wide Area Network)-Verbindung, z.B. frei von einer Verbindung über das Internet oder frei von einer Verbindung über ein (WAN-)Mobilfunk-Kommunikationssystem. Das lokale Kommunikationsnetzwerk ist also beispielsweise isoliert vom Internet. Ebenso kann die Kassenvorgangsprotokolliervorrichtung vom Internet isoliert sein oder zumindest auf die TSE-Funktionalität ausschließlich lokal (nicht entfernt über das Internet oder ein anderes WAN) zugegriffen werden.

Im Folgenden werden verschiedene Ausführungsbeispiele angegeben.

Ausführungsbeispiel 1 ist eine Kassenvorgangsprotokolliervorrichtung, wie sie in Figur 7 dargestellt ist.

Ausführungsbeispiel 2 ist eine Kassenvorgangsprotokolliervorrichtung gemäß Ausführungsbeispiel 1, wobei die Steuereinrichtung eingerichtet ist, von mehr Kassen die Kassenvorgangsprotokolliervorrichtung mit mehr Kassen Nachrichten bezüglich Kassenvorgängen zu empfangen, als technische Sicherheitseinrichtungen in der Kassenvorgangsprotokolliervorrichtung vorgesehen sind.

Ausführungsbeispiel 3 ist eine Kassenvorgangsprotokolliervorrichtung gemäß Ausführungsbeispiel 1 oder 2, wobei die Netzwerkschnittstelle eingerichtet ist, die Kassenvorgangsprotokolliervorrichtung mit mehr Kassen zu verbinden, als technische Sicherheitseinrichtungen in der Kassenvorgangsprotokolliervorrichtung vorgesehen sind. Ausführungsbeispiel 4 ist eine Kassenvorgangsprotokolliervorrichtung gemäß einem der Ausführungsbeispiele 1 bis 3, wobei jede technische Sicherheitseinrichtung auf einer jeweiligen Chipkarte implementiert ist.

Ausführungsbeispiel 5 ist eine Kassenvorgangsprotokolliervorrichtung gemäß Ausführungsbeispiel 4, aufweisend eine Chipkartenschnittstelleneinrichtung mit mehreren Chipkartenschnittstellen, wobei jede Chipkartenschnittstelle zum Verbinden einer auf einer Chipkarte implementierten technischen Sicherheitseinrichtung mit der Steuereinrichtung eingerichtet ist.

Ausführungsbeispiel 6 ist eine Kassenvorgangsprotokolliervorrichtung gemäß Ausführungsbeispiel 4 oder 5, wobei die Chipkarte ein Speicherkartenformat oder ein USB-Stick-Format hat.

Ausführungsbeispiel 7 ist eine Kassenvorgangsprotokolliervorrichtung gemäß Ausführungsbeispiel 5 oder 6, wobei jede Chipkartenschnittstelle zum Verbinden einer auf einer Chipkarte implementierten technischen Sicherheitseinrichtung mit der Steuereinrichtung mittels eines Computerbusses eingerichtet ist.

Ausführungsbeispiel 8 ist eine Kassenvorgangsprotokolliervorrichtung gemäß Ausführungsbeispiel 7, wobei der Computerbus ein USB-Bus ist.

Ausführungsbeispiel 9 ist eine Kassenvorgangsprotokolliervorrichtung gemäß einem der Ausführungsbeispiele 1 bis 8, wobei die Steuereinrichtung eingerichtet ist, jeden einer Mehrzahl von Kassenvorgängen jeweils einer technischen Sicherheitseinrichtung der Mehrzahl von technischen Sicherheitseinrichtungen zuzuweisen und Nachrichten von einer Kasse, die den Kassenvorgang betreffen, an die technische Sicherheitseinrichtung, der der Kassenvorgang zugewiesen ist, weiterzuleiten.

Ausführungsbeispiel 10 ist eine Kassenvorgangsprotokolliervorrichtung gemäß einem der Ausführungsbeispiele 1 bis 9, wobei die Steuereinrichtung eingerichtet ist, bei Empfang einer Nachricht von einer Kasse, die einen neu begonnenen Kassenvorgang anzeigt, eine technische Sicherheitseinrichtung der Mehrzahl von technischen Sicherheitseinrichtungen zur Protokollierung des Kassenvorgangs auszuwählen.

Ausführungsbeispiel 11 ist eine Kassenvorgangsprotokolliervorrichtung gemäß einem der Ausführungsbeispiele 1 bis 10, wobei die Steuereinrichtung eingerichtet ist, bei hinreichender Anzahl von Kassenvorgängen zwei oder mehr Kassenvorgänge derselben technischen Sicherheitseinrichtung zur Protokollierung zuzuweisen.

Ausführungsbeispiel 12 ist eine Kassenvorgangsprotokolliervorrichtung gemäß einem der Ausführungsbeispiele 1 bis 11, wobei die technischen Sicherheitseinrichtungen auswechselbar in der Kassenvorgangsprotokolliervorrichtung angeordnet sind.

Ausführungsbeispiel 13 ist eine Kassenvorgangsprotokolliervorrichtung gemäß einem der Ausführungsbeispiele 1 bis 12, wobei das Kommunikationsnetzwerk ein lokales Netzwerk ist.

Ausführungsbeispiel 14 ist eine Kassenvorgangsprotokolliervorrichtung gemäß einem der Ausführungsbeispiele 1 bis 13, wobei das Kommunikationsnetzwerk ein Ethernet ist.

Ausführungsbeispiel 15 ist eine Kassenvorgangsprotokolliervorrichtung gemäß einem der Ausführungsbeispiele 1 bis 12, wobei das Kommunikationsnetzwerk ein drahtloses lokales Netzwerk ist.

Ausführungsbeispiel 16 ist eine Kassenvorgangsprotokolliervorrichtung gemäß einem der Ausführungsbeispiele 1 bis 15, wobei die technischen Sicherheitseinrichtungen gemäß der Richtlinie des Bundesamts für Sicherheit in der Informationstechnik für technische Sicherheitseinrichtungen für elektronische Aufzeichnungssysteme ausgestaltet sind. Ausführungsbeispiel 17 ist eine Kassenvorgangsprotokolliervorrichtung gemäß einem der Ausführungsbeispiele 1 bis 16, wobei jede technische Sicherheitseinrichtung einen WORM-Speicher, einen FLASH-Speicher, einen nicht-flüchtigen Speicher oder einen Speicher gemäß einer anderen Speichertechnologie aufweist.

Obwohl die Erfindung vor allem unter Bezugnahme auf bestimmte Ausführungsformen gezeigt und beschrieben wurde, sollte es von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie er durch die nachfolgenden Ansprüche definiert wird, abzuweichen. Der Bereich der Erfindung wird daher durch die angefügten Ansprüche bestimmt, und es ist beabsichtigt, dass sämtliche Änderungen, welche unter den Wortsinn oder den Äquivalenzbereich der Ansprüche fallen, umfasst werden.

## Patentansprüche

1. Kassenvorgangsprotokolliervorrichtung aufweisend:
eine Netzwerkschnittstelle, eingerichtet zum Verbinden der
Kassenvorgangsprotokolliervorrichtung mit einer Mehrzahl von Kassen mittels eines Kommunikationsnetzwerks;
eine Mehrzahl von technischen Sicherheitseinrichtungen, die jeweils eine digitale Schnittstelle, ein Sicherheitsmodul und einen Speicher aufweisen und zum Protokollieren von Kassenvorgängen eingerichtet sind; und
eine Steuereinrichtung, die eingerichtet ist, mittels der Netzwerkschnittstelle von den Kassen Nachrichten bezüglich Kassenvorgängen zu empfangen und den technischen Sicherheitseinrichtungen zur Protokollierung zuzuweisen.

2. Kassenvorgangsprotokolliervorrichtung gemäß Anspruch 1, wobei die Steuereinrichtung eingerichtet ist, von mehr Kassen die Kassenvorgangsprotokolliervorrichtung mit mehr Kassen Nachrichten bezüglich Kassenvorgängen zu empfangen, als technische Sicherheitseinrichtungen in der Kassenvorgangsprotokolliervorrichtung vorgesehen sind.

3. Kassenvorgangsprotokolliervorrichtung gemäß Anspruch 1 oder 2, wobei die Netzwerkschnittstelle eingerichtet ist, die Kassenvorgangsprotokolliervorrichtung mit mehr Kassen zu verbinden, als technische Sicherheitseinrichtungen in der Kassenvorgangsprotokolliervorrichtung vorgesehen sind.

4. Kassenvorgangsprotokolliervorrichtung gemäß einem der Ansprüche 1 bis 3, wobei jede technische Sicherheitseinrichtung auf einer jeweiligen Chipkarte implementiert ist.

5. Kassenvorgangsprotokolliervorrichtung gemäß Anspruch 4, aufweisend eine Chipkartenschnittstelleneinrichtung mit mehreren Chipkartenschnittstellen, wobei jede Chipkartenschnittstelle zum Verbinden einer auf einer Chipkarte implementierten technischen Sicherheitseinrichtung mit der Steuereinrichtung eingerichtet ist.

6. Kassenvorgangsprotokolliervorrichtung gemäß Anspruch 4 oder 5, wobei die Chipkarte ein Speicherkartenformat oder ein USB-Stick-Format hat.

7. Kassenvorgangsprotokolliervorrichtung gemäß Anspruch 5 oder 6, wobei jede Chipkartenschnittstelle zum Verbinden einer auf einer Chipkarte implementierten technischen Sicherheitseinrichtung mit der Steuereinrichtung mittels eines Computerbusses eingerichtet ist.

8. Kassenvorgangsprotokolliervorrichtung gemäß Anspruch 7, wobei der Computerbus ein USB-Bus ist.

9. Kassenvorgangsprotokolliervorrichtung gemäß einem der Ansprüche 1 bis 8, wobei die Steuereinrichtung eingerichtet ist, jeden einer Mehrzahl von Kassenvorgängen jeweils einer technischen Sicherheitseinrichtung der Mehrzahl von technischen Sicherheitseinrichtungen zuzuweisen und Nachrichten von einer Kasse, die den Kassenvorgang betreffen, an die technische Sicherheitseinrichtung, der der Kassenvorgang zugewiesen ist, weiterzuleiten.

10. Kassenvorgangsprotokolliervorrichtung gemäß einem der Ansprüche 1 bis 9, wobei die Steuereinrichtung eingerichtet ist, bei Empfang einer Nachricht von einer Kasse, die einen neu begonnenen Kassenvorgang anzeigt, eine technische Sicherheitseinrichtung der Mehrzahl von technischen Sicherheitseinrichtungen zur Protokollierung des Kassenvorgangs auszuwählen.

11. Kassenvorgangsprotokolliervorrichtung gemäß einem der Ansprüche 1 bis 10, wobei die Steuereinrichtung eingerichtet ist, bei hinreichender Anzahl von Kassenvorgängen zwei oder mehr Kassenvorgänge derselben technischen Sicherheitseinrichtung zur Protokollierung zuzuweisen.

12. Kassenvorgangsprotokolliervorrichtung gemäß einem der Ansprüche 1 bis 11, wobei die technischen Sicherheitseinrichtungen auswechselbar in der Kassenvorgangsprotokolliervorrichtung angeordnet sind.

13. Kassenvorgangsprotokolliervorrichtung gemäß einem der Ansprüche 1 bis 12, wobei das Kommunikationsnetzwerk ein lokales Netzwerk ist.

14. Kassenvorgangsprotokolliervorrichtung gemäß einem der Ansprüche 1 bis 13, wobei das Kommunikationsnetzwerk ein Ethernet ist.

15. Kassenvorgangsprotokolliervorrichtung gemäß einem der Ansprüche 1 bis 12, wobei das Kommunikationsnetzwerk ein drahtloses lokales Netzwerk ist.

16. Kassenvorgangsprotokolliervorrichtung gemäß einem der Ansprüche 1 bis 15, wobei die technischen Sicherheitseinrichtungen gemäß der Richtlinie des Bundesamts für Sicherheit in der Informationstechnik für technische Sicherheitseinrichtungen für elektronische Aufzeichnungssysteme ausgestaltet sind.

17. Kassenvorgangsprotokolliervorrichtung gemäß einem der Ansprüche 1 bis 16, wobei jede technische Sicherheitseinrichtung einen WORM-Speicher, einen FLASH-Speicher, einen nicht-flüchtigen Speicher oder einen Speicher gemäß einer anderen Speichertechnologie aufweist.
